# EUROPEAN PATENT SPECIFICATION

(11) **EP 3 620 430 B1**
(45) Date of publication and mention of the grant of the patent: **04.11.2026**
(21) Application number: 18193537.0
(22) Date of filing: 10.09.2018
(51) Int. Cl.: B82Y 20/00, G02B 27/01, G02B 1/00, G02B 5/00, G02C 7/02

(54) **METHOD FOR DETERMINING AN OPTICAL SYSTEM WITH A METASURFACE AND ASSOCIATED PRODUCTS**
VERFAHREN ZUM BESTIMMEN EINES OPTISCHEN SYSTEMS MIT EINER META-OBERFLÄCHE UND ZUGEHÖRIGE PRODUKTE
PROCÉDÉ DE DÉTERMINATION D'UN SYSTÈME OPTIQUE À MÉTASURFACE ET PRODUITS ASSOCIÉS

(43) Date of publication of application: 11.03.2020
(73) Proprietor: ESSILOR INTERNATIONAL, 94220 Charenton-Le-Pont (FR)
(72) Inventor: FERMIGIER, Bruno, 94220 Charenton-Le-Pont (FR); NETTER, Estelle, 94220 Charenton-Le-Pont (FR); TROTTIER-LAPOINTE, William, 94220 Charenton-Le-Pont (FR); BIVER, Claudine, 94220 Charenton-Le-Pont (FR)
(74) Representative: Korakis-Ménager, Sophie

(56) References cited:
- WO-A1-2017/040854
- US-A1- 2012 259 411
- US-A1- 2014 277 433
- US-A1- 2016 327 812
- US-A1- 2017 212 285
- US-A1- 2018 172 988
- US-A1- 2018 217 395
- US-A1- 2018 231 700

## Description

### FIELD OF THE INVENTION

The present invention concerns a computer-implemented method for determining parameters of an optical system comprising a lens comprising a metasurface. The present invention also relates to an associated optical system, device, computer program product, computer readable-medium and set of data. The present invention also concerns a method for fabricating such optical system and associated apparatuses.

### BACKGROUND OF THE INVENTION

Head-mounted devices with display features are know in the art. Such devices include so-called « smart glasses », which allow the wearer thereof to visualize images or texts for augmented reality.

In order to improve wearer visual comfort, it is desirable to provide methods and systems wherein images and texts are displayed in a customized way that is specifically adapted to the wearer and/or to the worn device.

For ametropic wearers, visual comfort requires that suitable correction is provided not only for the « natural vision » (vision of the environment surrounding for the wearer), but also for the visualization of the virtual image or holographic image.

For emmetropic wearers, correction for virtual vision may be required, for example following reduced reserve of accommodation, or for providing specific vision in different gaze directions (for example near-vision versus far-vision).

US2016327812A1 is cited as an example of a computer-implemented method of the prior art for determining parameters of a spectacles lens. US2018231700A1 is cited as an example of a head mounted device of the prior art.

### SUMMARY OF THE INVENTION

There is therefore a need for head-mounted devices alleviating the previous defects.

For this, the present specification describes a computer-implemented method for determining parameters of an optical system intended to be held by a frame and worn by a wearer, the optical system comprising a lens, the lens further comprising a metasurface, the metasurface being formed by at least a set of nanostructures, parameters being defined for the lens and the metasurface, the method comprising the steps of :
- providing an optical system transmission target optical function and an optical system reflective target optical function,
- providing an optical transmission cost function, the optical transmission cost function being related to an optical function of the system in transmission when the system is worn by the wearer,
- providing an optical reflective cost function, the optical reflective cost function being related to an optical function of the system in reflection when the system is worn by the wearer, and
- determining the optical system that minimizes the difference between a global cost function and a target value of the global cost function by modifying at least one parameter of the system, among which one of the metasurface, the global cost function being a function of the optical transmission cost function and of the optical reflective cost function and the target value being a function of the optical system transmission target optical function and of the optical system reflective target optical function..

According to specific embodiments, the method for determining parameters comprises one or several of the following features, when technically possible:
- the parameters of the lens are chosen in the group consisting of :
   - the diameter of the lens,
   - the thickness of the lens,
   - the material of the lens,
   - for at least one surface of the lens having in each point a mean sphere value and a cylinder value, the value of the mean sphere value and of the cylinder in each point, and
   - the fitting parameters of the lens onto the frame,
   the parameters of the metasurface being, for instance, chosen in the group consisting of:
   - the number of set of nanostructures,
   - the spatial extension of each set of nanostructures,
   - the location of each set of nanostructures,
   - the material of the nanostructures,
   - the shape of the nanostructures,
   - the number of nanostructures within the set of nanostructures to which the nanostructures belong,
   - the orientation of the nanostructures,
   - the aspect ratio of the nanostructures,
   - the distance between nanostructures,
   - the properties of the lattice, when the nanostructures are arranged in lattice, notably the nature of the lattice or the number of nanostructures in the lattice,
   - the location of the metasurface with relation to a front surface and a rear surface of the lens, the metasurface being located on the rear surface of the lens, on the front surface of the lens or between the rear surface and the front surface, and
   - the methods of activation of a set of nanostructures if the nanostructures of the set of nanostructures are activable by several methods of activation.
- at least one of the following properties is fulfilled:
   - the optical system transmission target function is suited for the wearer, the transmission target function defining for each gaze direction of the wearer when the optical system is worn a refractive power, a module of astigmatism and an axis of astigmatism, said refractive power, module of astigmatism and axis of astigmatism being determined based on prescribed astigmatism and prescribed refractive power,
   - the optical system reflective target function is suited for the visualization of a virtual image by the wearer when the metasurface is illuminated by a light beam,
   - the optical system reflective target function is adapted for the wearer's virtual vision,
   - the optical system reflective target function is suited to form an image of an eye of the wearer at a predetermined location, and
   - the optical system reflective target function is suited to form a virtual image.
- the optical system further comprises at least one of the following elements notably intended to be held by the frame:
   - a light source,
   - an image source,
   - a light collector, the light collector being a set of lenses, notably a set of lenses among which at least one comprises a metasurface formed by at least one set of nanostructures,
   - a light detector,
   - a light guide, notably a light guide comprising a metasurface formed by at least a set of nanostructures,
   - a filter, and
   - an imaging detector.
- the optical system transmission target optical function is defined for a first range of wavelengths and the optical system reflective target optical function is defined for a second range of wavelengths, at least one of the following properties being fulfilled:
   - the intersection between the first range and the second range is void,
   - the first range of wavelengths covers the wavelengths corresponding to the visible band,
   - the first range of wavelengths only comprises the wavelengths corresponding to the visible band,
   - the second range of wavelengths is adapted to the emission spectrum of an external source,
   - the second range of wavelengths only comprises the wavelengths in the infrared,
   - the intersection between the first range and the second range is inferior to five radiations,
   - the intersection between the first range of wavelengths and the second range of wavelengths is three radiations, one radiation corresponding to a green color, one radiation corresponding to a blue color and one radiation corresponding to a red color,
   - the intersection between the first range of wavelengths and the second range of wavelengths comprises an ultraviolet radiation,
   - the intersection between the first range of wavelengths and the second range of wavelengths comprises one radiation corresponding to a blue color, and
   - the intersection between the first range of wavelengths and the second range of wavelengths comprises at least one radiation chosen among an ultraviolet radiation, a visible radiation and an infrared radiation.

The present specification also relates to an optical system intended to be held by a frame and worn by a wearer, the optical system comprising a lens, the lens further comprising a metasurface formed by at least a set of nanostructures, at least the lens and the metasurface being designed to achieve an optical system transmission target optical function and an optical system reflective target optical function.

According to specific embodiments, the lens is an ophthalmic lens adapted to correct the ametropia of the wearer, the lens being notably adapted to be fitted onto the frame.

The present specification also relates to a head mounted device, intended to be worn by a wearer, the device comprising a frame and an optical system as previously described.

According to specific embodiments, the device comprises one or several of the following features, when technically possible :
- the device further comprises an image source, notably intended to be held by the frame, the image source being configured for illuminating said metasurface so as to cause, upon reflection onto the metasurface and optionally guiding by a light guide, the visualization of a virtual image by the wearer, the metasurface being notably further configured to correct the wearer's virtual vision.
- the device further comprises a light source, notably intended to be held by the frame, and a collector configured to collect at least part of the light reflected by said eye and a light detector and optionally a light guide, the collector, the metasurface, the detector and optionally the light guide being arranged for forming an image of said eye of the wearer on the detector, the collector preferably comprising another metasurface, notably provided on a frame that is part of the device.

The present specification also concerns a computer program product comprising one or more stored sequence of instructions that is accessible to a processor and which, when executed by the processor, causes the processor to carry out the steps of the method as previously described.

The present specification also relates to a computer readable-medium carrying out one or more sequences of instructions of the computer program as previously described.

The present specification also concerns a set of data comprising the parameters of the optical system determined by carrying out a method as previously described.

The present specification also relates to a method for manufacturing an optical system intended to be held by a frame and worn by a wearer, the optical system comprising a lens, the lens further comprising a metasurface formed by at least a set of nanostructures, the method comprising the steps of:
- carrying out at a first location the method previously described, to determine the parameters of the optical system, the determined parameters of the optical system comprising parameters of the lens and parameters of the metasurface,
- manufacturing the lens according to the parameters of the lens at a second location,
- manufacturing the metasurface according to the parameters of the metasurface at a third location,
the method further optionally comprising at least one of the following sequences of steps:
- a first sequence of steps comprising the steps of:
   - providing data relative to the eyes of the wearer at a fourth location,
   - transmitting data relative to the eyes of the wearer from the fourth location to the first location,
   - obtaining a transmission target function based on the data relative to the eyes of the wearer,
- a second sequence of steps comprising the steps of:
   - transferring the lens and the metasurface to a fifth location, and
   - assembling the lens and the metasurface to obtain at least a part of the device, the assembling being preferably achieved by gluing, and
- a third sequence of steps comprising the steps of :
   - transmitting the parameters of the lens to a second location, and
   - transmitting the parameters of the metasurface to a third location.

The present specification also concerns a set of apparatuses for manufacturing a device, wherein the apparatuses are adapted to carry out steps of the method as previously described.

The invention is defined by the appended claims.

### BRIEF DESCRIPTION OF THE DRAWINGS

Further features and advantages of the invention will appear from the following description of embodiments of the invention, given as non-limiting examples, with reference to the accompanying drawings listed hereunder.
- figure 1 shows a side and schematic view of an optical system ;
- figure 2 is the view of the optical system of figure 1 in transmission ;
- figure 3 shows a flowchart of an example of carrying out an example of a method for determining the parameters of an optical system according to figure 1 ;
- figure 4 to figure 12 show the structures resulting from the different stages of an example of a method for fabricating an optical system such as the one of figure 1 implying a main step of dry etching ;
- figure 13 to figure 18 show the structures resulting from the different stages of an example of a method for fabricating an optical system such as the one of figure 1 implying a main step of ALD technique ;
- figure 19 is a schematic three-dimensional view of a head-mounted display device comprising the optical system of figure 1,
- figure 20 is a schematic view of an eye-tracker comprising the optical system of figure 1 wherein the detector and the source are situated at the same location, and
- figure 21 is a schematic three-dimensional view of an eye-tracker comprising the optical system of figure 1 wherein the detector and the source are situated at different locations.

It can be appreciated that elements in the figures are illustrated for simplicity and clarity and have not necessarily been drawn to scale. For example, the dimensions of some of the elements in the figures may be exaggerated relative to other elements to help improve the understanding of the present invention.

### DESCRIPTION OF THE PREFERRED EMBODIMENTS

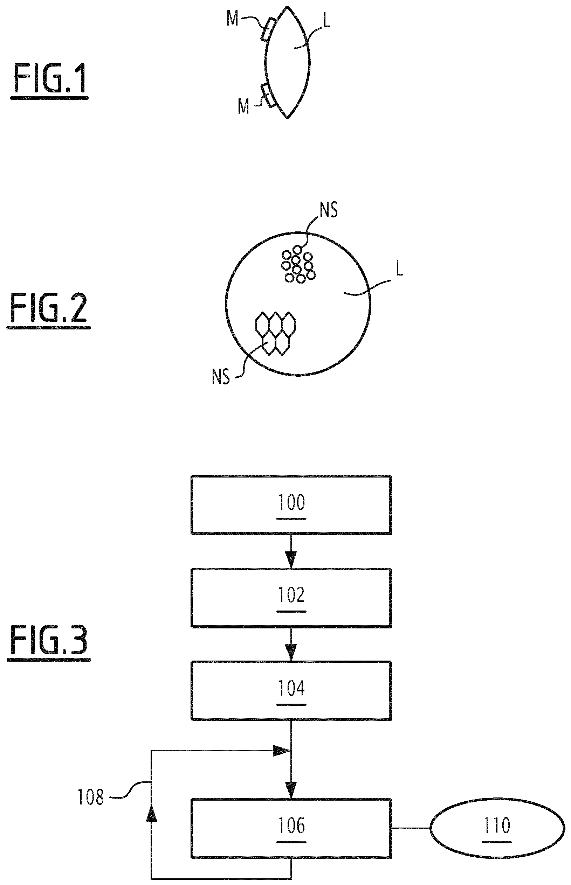

By referring to figures 1 and 2, an optical system intended to be held by a frame and worn by a wearer is visible.

The optical system comprises a lens L.

The lens may be any kind of lens.

The lens can notably be a spectacle lens.

For example, the lens is an ophthalmic lens.

For instance, the lens is a unifocal lens, a multifocal lens, a bifocal lens, a progressive addition lens, a microlenses array or an active lens with phase and/or amplitude modulation.

Several lens parameters LP can be defined for the lens.

Lens parameters LP refer to a set of one or more parameters characterizing an ophthalmic lens. Said parameters comprise data defining one or more geometrical (surface) characteristics and/or one or more optical characteristics of the lens, such as the optical index of the lens material. Lens parameter LP may correspond to the back surface of a lens and/or to the front surface of a lens, or to their relative positions.

Said lens parameter LP may further include data pertaining to the general geometry of the lens, for example average radius of curvature, convexity data, etc.

Said lens parameter LP may also comprise data on surface coatings of the lens being present on the lens and characteristics thereof.

As a specific example, the lens parameters LP may comprise data pertaining to a holographic mirror being present on the lens and characteristics thereof.

The lens parameters LP may also comprise, for specific cases, data related to phase and/or amplitude modulation.

As an example, the lens parameters LP may comprise data pertaining to any amplitude modulation materials such as electro-chromic materials being present in the lens and characteristics thereof.

The lens parameters LP may also encompass in this specification one or more frame parameters.

A frame parameter refers to a set of one or more data relating to the structure of the frame, and may comprise design parameters such as the relative location of one element of the frame. Examples include data such as pantoscopic angle, curve, shape and dimensions of the frame, etc.

When several lens parameters LP are defined for the lens, many different lens parameters LP can be considered.

A non-exhaustive list is given below:
- the diameter of the lens,
- the thickness of the lens, the thickness being, for instance, measured along a center line of the lens,
- the material of the lens,
- for at least one surface of the lens having in each point a mean sphere value and a cylinder value, the value of the mean sphere value and of the cylinder in each point, and
- the fitting parameters of the lens onto the frame,

The lens comprises a metasurface M formed by at least a set of nanostructures NS (two in the case of figure 2).

Functionally, a set of nanostructures is configured to impart an amplitude and/or a phase change to incident light so as to scatter the incident light and/or diffuse the incident light and/or absorb the incident light. For this, the nanostructures of a set are configured to function as resonators.

Structurally, nanostructures are in the form of nanoscale features that are formed on (in other words, directly on) or are integrated in a surface of substrate. As used herein, the term "nanoscale" when used in connection with a feature means that the dimensions of the features are less than 1 micron. In general, the dimensions of the nanostructures will scale with the shortest wavelength of interest.

In the context of the present disclosure, when visible light is considered, the largest linear dimension of the nanostructure in the plane of the substrate surface (length or width) is less than or equal to 500 nanometers (nm), such as less than or equal to 250 nm, or even less than or equal to 100 nm.

Without limitation, in some embodiments the nanostructures described herein are nanoscale structures formed on a surface of substrate, and have a longest linear dimension of about 100 to about 200 nanometers.

In some instances, the largest linear feature size of nanostructures is their height relative to the surface of substrate which bears the nanostructure in question. In such instances, the height of the nanostructures may be less than or equal to 1000 nm, such as less than or equal to 600 nm. It is noted however that the height of the nanostructures is not limited to those ranges, and that their height may be larger than 1 micron if desired.

The distance (also named "period" or "fundamental period") between adjacent nanostructures in each set may vary widely, and may be selected during the design of optical system to facilitate the attainment of a desired phase change at a particular portion of the lens.

According to a specific example, the nanostructures are non-periodical.

Without limitation, in some embodiments, the period between adjacent nanostructures ranges from about 50 to about 1000 nanometers (nm), such as from about 100 nm to about 500 nm, about 100 nm to about 300 nm, or even about 100 nm to about 200 nm. In some embodiments, the period between adjacent nanostructures in a set is greater than or equal to 100 nm to facilitate production of a set via lithographic or other techniques.

In instances where nanostructures are included in a Bravais lattice (that is, as an example, a hexagonal Bravais lattice) formed by unit cells containing a plurality of nanostructures, the period of the nanostructures may correspond to one or more lattice parameters of the unit cell(s) used to form the lattice.

The unit cells may have any suitable geometry, and may be symmetrical or asymmetrical. Without limitation, in some embodiments all or at least a portion of the shape of the unit cells and their contents are symmetrical (for instance, square, hexagonal, triangular, etc.), so as to reduce or eliminate polarization dependent effects. A plurality of such unit cells may be used to make up one or more regions of the set. In such instances the geometry of each unit cell (for instance, length and width) and/or the nanostructures therein (for instance, nanostructure height, width, diameter and position within a unit cell) may be controlled such that the nanostructures in each respective unit cell impart an appropriate phase change to incident light, based at least in part on the position of the unit cell relative to the optical axis of metasurface. A specific application of this embodiment consists in using a stack of several metasurfaces in the thickness axis to achieve different optical functions. Focusing and correcting are examples of such optical function.

Although the cylindrical pillar shape is the most common shape, the shape of the nanostructures described herein can vary considerably. For example, the nanostructures are in the form of cylindrical pillars, ellipsoidal pillars, spheres, rectangular prisms, other scattering structures, or the like.

When the nanostructures described herein are in the form of pillars, such pillars may have one or more than one side. Examples of such pillars include cylindrical (one sided) pillars, triangular (three sided) pillars, quadrilateral (four sided pillars), pentagonal (five sided) pillars, and the like.

As noted previously the dimensions of the nanostructures described herein may vary considerably. For example in some embodiments the set described herein include nanostructures, wherein the height of such nanostructures is fixed or variable across the entirety or a portion of a metasurface. In any case, the height of the nanostructures may be in the range of from about 50 nm to about 2000 nm, such as about 100 nm to about 600 nm, or even about 100 nm to about 200 nm. In some embodiments, the height of the nanostructures is greater than 100 nm. Of course such ranges are enumerated for the sake of example only, and the nanostructures herein may be of any suitable height.

The lateral size of the nanostructures described herein may also vary considerably. For example, in instances where the nanostructures are in the form of cylindrical nanoscale pillars, a radius may be defined for a pillar as the radius of the circle that is obtained by the intersection of the pillar with the substrate plane. The radius of such pillars may range, for example, from about 25 nm to about 500 nm, such as from about 50 nm to about 250 nm, or even about 50 to about 100 nm. Without limitation, in some embodiments the nanostructures are in the form of cylindrical pillars having a diameter of greater than or equal to about 50 nm. Similarly in instances where the nanostructures include or are in the form of multisided pillars or other geometric shapes, such structures may have a lateral length (i.e., a longest linear dimension as measured between opposing sides of a nanostructure) ranging from about 50 nm to about 2000 nm, such as about 100 nm to about 600 nm, or even about 100 to about 200 nm. Of course such ranges are enumerated for the sake of example only.

A wide variety of materials may be used to form the nanostructures. In some instances, it may be desirable to select the materials for forming the nanostructures based on the wavelength(s) of light that will be incident on the metasurface in a target application.

When a target application involves using the metasurface to impart a phase change to visible light, for example, it may be desirable to form the nanostructures from one or more materials that interact with visible light.

Non-limiting examples of such materials include high refractive index materials.

The nanostructures are generally made in material exhibiting relatively high optical index. For instance, the TiO₂ is an appropriate material, notably thanks to its transparency for visible light and its high optical index of about 2.5.

For applications where a slight absorption is tolerated, other materials are possible. FeO₂ and BiFeO₃ are specific interesting examples.

The nanostructures may be in a dielectric material which can be selected from oxides, nitrides, sulfides and pure elements exhibiting sufficient dielectric properties for enabling to impart a amplitude and/or a phase change to incident light.

Aluminium oxide (Al₂O₃), silicon oxide (SiO₂), hafnium oxide, (HfO₂), zinc oxide (ZnO), magnesium oxide (MgO) and titanium oxide (TiO₂) are specific examples of oxides. Nb₂O₅ and Ta₂O₅ may also be considered.

Silicon nitride (Si₃N₄), boron nitride (BN), aluminium nitride (AIN) and tungsten nitride (WN) are specific examples of nitrides.

ZnS and CdS are examples of sulfides.

Other examples include carbides such as SiC and diamond.

Alternatively or additionally, the nanostructures may be formed from or include one or more high-index polymers (n>1.6), such as but not limited to acrylics. Polymers with even higher index may also be used, and may be formed, for example, by highly loading a polymer matrix with nanoparticles that have a refractive index of greater than or equal to 1.8, or even greater than or equal to 2.

The nanostructures described herein are not limited to a single material, and may be formed from more than one material. For example, the nanostructures may include two or more of the above noted materials, wherein alternating layers (or other configurations) of such materials are used to "build up" a nanostructure on the surface of a substrate.

The refractive index of the materials used to form the nanostructures may impact their performance for a given application. It may therefore be desirable to select materials for forming the nanostructures based on their refractive index.

In some embodiments the nanostructures may be formed from or include dielectric or other materials having a refractive index that is greater than or equal to about 1.5, 2.0, 2.3, 2.5, 2.7, or more. Without limitation, in some embodiments nanostructures are formed from or include dielectric materials having a refractive index greater than or equal to 2. Non-limiting examples of such materials include those mentioned above.

The microstructure of the materials used as nanostructures may also have an impact on their optical performance. For example, in some instances the microstructure of the materials used to form nanostructures may give rise to artifacts.

Alternatively or additionally, the microstructure of the materials of nanostructures can cause anisotropic propagation of light through metasurface. In this context as can be found in the literature, microstructure refers to the positioning of the materials of nanostructures at the atomic level. It may therefore be desirable to select materials for use as nanostructures based on their microstructure. For example, it may be desirable to use amorphous or cubic materials (for instance, amorphous TiO₂, cubic ZnO), so as to control anisotropic propagation effects in metasurface. Of course, it is not necessary to use amorphous or cubic materials to form nanostructures, and materials with other microstructures may also be used. It is noted that nanostructures consistent with the present disclosure need not have a uniform (for instance, single) nanostructure, and that such structures may include a composite, random, or other complicated microstructure, as desired.

As appears from the previous description of the many metasurfaces that can be considered, a metasurface is characterized by the choice of many metasurface parameters. In other words, when several metasurface parameters PM are defined for the metasurface, many different metasurface parameters PM can be considered.

A non-exhaustive list is given below:
- the number of sets of nanostructures,
- the spatial extension of each set of nanostructures,
- the location of each set of nanostructures,
- the materials of the nanostructures,
- the shape of the nanostructures,
- the number of nanostructures within the set of nanostructures to which the nanostructures belong,
- the orientation of the nanostructures,
- the aspect ratio of the nanostructures,
- the distance between nanostructures,
- the properties of the lattice, when the nanostructures are arranged in lattice, notably the nature of the lattice or the number of nanostructures in the lattice,
- the location of the metasurface in relation to a front surface and a rear surface of the lens, the metasurface being located on the rear surface of the lens, on the front surface of the lens or between the rear surface and the front surface, and
- the methods of activation of a set of nanostructures if the nanostructures of the set of nanostructures are activable by several methods of activation.

The lens and the metasurface are designed to achieve an optical system transmission target optical function and an optical system reflective target optical function.

As a specific example detailed below, the lens is designed to achieve the optical system transmission target optical function and the metasurface is designed to the optical system reflective target optical function.

The lens may be configured for either an ametropic wearer or an emmetropic wearer.

In both cases, the optical system transmission target optical function is generally determined based on wearer ophthalmic data.

In what follows, only examples of phase functions are detailed for the transmission target optical function but amplitude functions may also be considered, notably for solar applications.

Wearer ophthalmic data include wearer prescription data, wearer eye sensitivity data and wearer ophthalmic biometry data, and generally data pertaining to any wearer vision defect, including for example data pertaining to chromatic aberrations, lack of eye lens (aphakia), etc.

Prescription data refer to one or more data obtained for the wearer and indicating for each eye a prescribed far vision mean refractive power P_{FV}, and/or a prescribed astigmatism value CYL_{FV} and/or a prescribed astigmatism axis AXE_{FV} and/or a prescribed addition A suitable for correcting the ametropia and/or presbyopia of each eye.

The mean refractive power P_{FV} is obtained by summing the half value of the prescribed astigmatism value CYL_{FV} to the prescribed sphere value SPH_{FV}, that is: ${P}_{FV} = {SPH}_{FV} + {CYL}_{FV} / 2$

Then, the mean refractive power for each eye for proximate (near) vision P_{NV} is obtained by summing the prescribed addition A to the far vision mean refractive power P_{FV} prescribed for the same eye: ${P}_{NV} = {P}_{FV} + A$

In the case of a prescription for progressive lenses, prescription data comprise wearer data indicating for each eye values for SPH_{FV}, CYL_{FV} and A.

In preferred embodiments, wearer prescription data are selected from astigmatism module, astigmatism axis, power, prism and addition, and more generally any data indicating the correction of any given vision defect. Such defect may result from a partial retinal detachment, retina or iris or cornea malformation.

Wearer eye sensitivity data include data for spectral sensitivity (to one or more wavelengths or spectral bands), general sensitivity such as brightness sensitivity, for example for outdoors brightness sensitivity. Such data are of importance to optimize contrast for visualization of an image by the wearer.

Wearer ophthalmic biometry data include data pertaining to the morphology of the wearer, and typically include one or more of monocular pupillary distance with relation to the nose, inter-pupillary distance, axial length of the eye, position of the centre of rotation of the eye, punctum remotum or punctum proximum.

As a specific embodiment, the lens is an ophthalmic lens adapted to correct the ametropia of the wearer. In such case, the optical system transmission target function is suited for the wearer, the transmission target function defining for each gaze direction of the wearer when the optical system is worn a refractive power, a module of astigmatism and an axis of astigmatism, said refractive power, module of astigmatism and axis of astigmatism being determined based on prescribed astigmatism and prescribed refractive power.

The optical system transmission target optical function is defined for a first range of wavelengths. By commodity, the first range of wavelengths is named "range of wavelengths in transmission".

For the optical system reflective target optical function, the application is the determining factor. Specific examples of optical system reflective target optical function are given when describing specific applications of the optical system.

The optical system reflective target optical function is defined for a second range of wavelengths. By commodity, the second range of wavelengths is named "range of wavelengths in reflection".

In view of these optical functions, so as to design the lens and the metasurface, a method for determining parameters of the optical system can be considered.

The parameters of the optical system are notably the lens parameters LP and the metasurface parameters MP.

As appears in figure 3, the method for determining parameters comprises a step of providing 100 an optical system transmission target optical function and an optical system reflective target optical function.

It should first be noted that each optical function may be defined in any way, notably in accordance with an ergorama. Said ergorama may define the distance of visualization and/or direction of visualization of an image by the wearer as a function of the gaze directions when wearing the frame holding the optical system.

The method for determining parameters also comprises a step of providing 102 an optical transmission cost function, the optical transmission cost function being related to an optical function of the system in transmission when the system is worn by the wearer,
The optical transmission cost function for a current optical system is typically a difference between the optical function of current optical system in transmission and the optical system transmission target optical function.

The method for determining parameters also comprises a step of providing 104 an optical reflective cost function, the optical reflective cost function being related to an optical function of the system in reflection when the system is worn by the wearer.

In this definition of the optical reflective cost function, it should be understood that the reflection can be specular or diffuse or a combination of both. Notably, the specular and diffuse respective parts can be chosen for the optical reflective cost function.

The optical reflective cost function for a current optical system is typically a difference between the optical function of current optical system in reflection and the optical system reflective target optical function.

The method for determining parameters also comprises a step for determining 106 the optical system. By determining the optical system, it is meant determining the parameters of the optical system.

This step for determining 106 corresponds to an optimizing step that is iterated as shown by arrow 108. The parameters, among which at least one of the metasurface, are variables for this step.

At each iteration, the parameters are modified so that the optical system minimizes the difference between a global cost function and a target value of the global cost function.

By definition, the global cost function is a function of the optical transmission cost function and of the optical reflective cost function. For instance, the function corresponds to a ponderation of each optical cost functions.

Similarly, the target value is a function of the optical system transmission target optical function and of the optical system reflective target optical function. The function is generally the same function as the function previously defined for the global cost function.

The method enables to obtain the parameters of the optical system (see reference sign 110 on figure 3).

This method can be implemented on a computer. In this context, unless specifically stated otherwise, it is appreciated that throughout this specification discussions utilizing terms such as "computing", "calculating" and "generating" or the like, refer to the action and/or processes of a computer or computing system, or similar electronic computing device, that manipulate and/or transform data represented as physical, such as electronic, quantities within the computing system's registers and/or memories into other data similarly represented as physical quantities within the computer system's memories, registers or other such information storage, transmission or display devices.

A computer program product comprising one or more stored sequences of instruction that is accessible to a processor and which, when executed by the processor, causes the processor to carry out the steps of the method is also proposed.

Such a computer program may be stored in a computer readable storage medium, such as, but is not limited to, any type of disk including floppy disks, optical disks, CD-ROMs, magnetic-optical disks, read-only memories (ROMs), random access memories (RAMs) electrically programmable read-only memories (EPROMs), electrically erasable and programmable read-only memories (EEPROMs), magnetic or optical cards, or any other type of media suitable for storing electronic instructions, and capable of being coupled to a computer system bus. A computer-readable medium carrying one or more sequences of instructions of the computer program product is thus proposed. This enables to carry out the method in any location.

The processes and displays presented herein are not inherently related to any particular computer or other apparatus. Various general purpose systems may be used with programs in accordance with the teachings herein, or it may prove convenient to construct a more specialized apparatus to perform the desired method. The desired structure for a variety of these systems will appear from the description below. In addition, embodiments of the present invention are not described with reference to any particular programming language. It will be appreciated that a variety of programming languages may be used to implement the teachings of the inventions as described herein.

Before detailing how the optical system may be manufactured, it is first interesting to give examples of method for manufacturing a set of nanostructures.

Several methods for fabricating the set of nanostructures on a substrate exist. Two specific methods are detailed below by reference to the technique they imply.

A first example is a method for fabricating implying a dry etching technique. Dry etching consists in etching a sample with energetic ions. These ions have an energy, a speed and a direction which enable to create precise structures. This technique is applied to any metallic oxide, such as TiO₂, ZrO₂ and SiO₂.

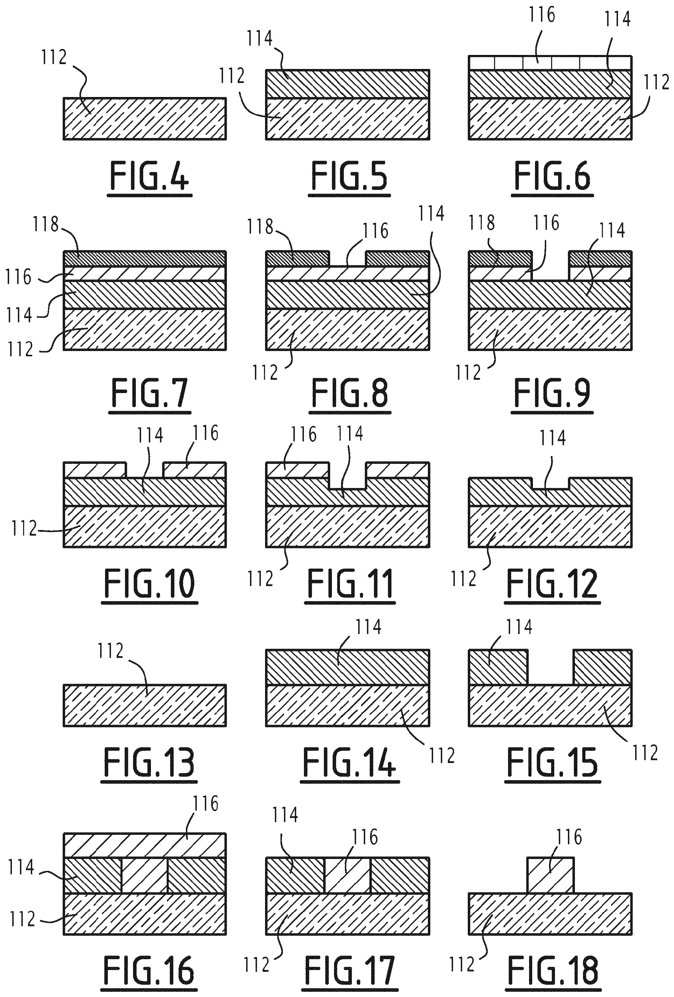

The dry etching technique implies carrying out several steps which results in a structure that is represented for each step in reference to figure 4 to figure 12.

A substrate 112 is first provided (see figure 4). The substrate is made of mineral or plastic material.

A layer 114 of TiO₂ is then deposited (see figure 5).

The deposition may be achieved by using a PVD technique or a CVD technique.

Physical vapor deposition (PVD) describes a variety of vacuum deposition methods which can be used to produce thin films and coatings. PVD is characterized by a process in which the material goes from a condensed phase to a vapor phase and then back to a thin film condensed phase. The most common PVD processes are sputtering and evaporation.

In chemical vapor deposition (CVD), the substrate is exposed to one or more volatile precursors, which react and/or decompose on the substrate surface to produce the desired deposit. Frequently, volatile by-products are also produced, which are removed by gas flow through the reaction chamber.

Plasma enhanced chemical vapor deposition (PECVD) could also be used to realize the desired deposit. PECVD is a chemical vapor deposition process involving chemical reactions, which occur after creation of a plasma of the reacting gases.

Alternatively, the deposition may be achieved by any technical wet deposition coating method, like spin coating, spray coating or inkjet coating.

A layer 116 of Cr is then deposited by a PVD or CVD technique (see figure 6).

A photosensitive resin 118 is then applied on the Cr layer by a coating technique, such as spin coating. The layer assembly obtained is represented on figure 7.

Then, a lithography step is carried out by recovering the photosensitive resin with a mask with a desired pattern and exposing the mask to ultraviolet radiations. The exposed areas become soluble and are removed by using a cleaning solution. An annealing step is then carried out to render the structure more robust. The structure can be seen on figure 8.

The Cr layer 116 is then etched with a chlorine and oxygen plasma (see figure 9).

The photosensitive resin 118 is removed by using a second cleaning solution, the resulting structure being represented on figure 10.

The TiO₂ layer 114 is then etched. Such step may, for instance, be achieved by using a DRIE technique based on a fluorinate gas, such as SF6 or CF4 (see figure 11).

Deep reactive-ion etching (DRIE) is a highly anisotropic etch process used to create deep penetration, steep-sided holes and trenches in wafers/substrates, typically with high aspect ratios.

At last, the Cr layer 116 is removed with a wet etching using an acid solution based on HCl. The obtained structure is visible on figure 12.

These different steps are to be repeated for each etching pattern to be realized by beginning from the less deep etching pattern to the deepest etching pattern.

A second example is a method for fabricating implying an ALD technique.

Atomic layer deposition (ALD) is a thin-film deposition technique based on the sequential use of a gas phase chemical process. ALD is considered a subclass of chemical vapour deposition. The majority of ALD reactions use two chemicals, typically called precursors. These precursors react with the surface of a material one at a time in a sequential, self-limiting, manner. Through the repeated exposure to separate precursors, a thin film is slowly deposited.

Such technique is usable for many materials due to its versatility and notably for several oxides such as ZrO₂ or SiO₂.

The ALD technique implies carrying out several steps which results in a structure that is represented for each step in reference to figure 13 to figure 18.

A transparent substrate 112 is first provided (see figure 13). The substrate is, for instance, in glass or an organic substrate.

Then a photosensitive resin 114 is applied on the substrate 112 by a coating technique, such as spin coating. The layer assembly obtained is represented on figure 14.

Then, a lithography step is carried out by recovering the photosensitive resin with a mask with a desired pattern and exposing the mask to ultraviolet radiations. The exposed area become soluble and are removed by using a cleaning solution. An annealing step is then carried out to render the structure more robust. The structure can be seen on figure 15.

A TiO₂ layer 116 is then deposited by ALD technique (see figure 16). The thickness of the TiO₂ layer 166 above the resin has to be thick enough so that the thickness be superior to half the roughness of the resin layer 114.

The TiO₂ layer 116 is then etched so that only the TiO₂, which is situated between the two portions of photosensitive resin that were not removed at the lithography step, is kept. For this, a HF solution may be used. The resulting structure is represented on figure 17.

Then, the two portions of photosensitive resin are removed by using a solution. The solution is, for example, a piranha solution. Piranha solution also known as piranha etch, is a mixture of sulfuric acid (H₂SO₄) and hydrogen peroxide (H₂O₂), used to clean organic residues off substrates. Because the mixture is a strong oxidizing agent, it will remove most organic matter, and it will also hydroxylate most surfaces (add OH groups), making them highly hydrophilic (water-compatible). The resulting structure can be seen on figure 18.

According to a variant, a thick layer of SiO₂ is deposited before all the previously described steps at the very beginning in order to render the surface of the lens not chemically active. This remark is valid for both specific methods (dry etching and ALD technique)

In a preferred embodiment, the previously described techniques are applied at the same location where the method for determining is carried out and the lens is manufactured, typically at an optical system manufacturing site.

The optical system manufacturing site is generally located in an optical lab, namely a place equipped with manufacturing apparatuses for manufacturing optical system such as lenses by following optical system orders, based upon optical system parameters previously obtained or generated.

Said manufacturing apparatuses may include one or more of surfacing including digital surfacing, polishing, edging apparatuses, etc. The optical system manufacturing site may comprise a combination of manufacturing apparatuses, including several different surfacing apparatus, and/or several polishing apparatuses.

In such case, the optical system is manufactured by a method for manufacturing which comprises a step of carrying out, a first step of manufacturing and a second step of manufacturing.

At the step of carrying out, the method for determining the parameters of the optical system as previously described is carried out. This enables to obtain determined parameters. The determined parameters of the optical system comprise parameters of the lens and parameters of the metasurface.

At the first step of manufacturing, the lens is manufactured according to the determined lens parameters.

At the second step of manufacturing, the metasurface is manufactured according to the determined parameters of the metasurface.

Many variations of such manufacturing can be considered.

In a general way, each step of carrying out and manufacturing is carried out in a respective location.

For instance, the step of carrying out is carried out at a first location, the first step of manufacturing is carried at a second location and the second step of manufacturing is carried at a third location. The first location corresponds to the optical system determination site while the second step corresponds to the lens manufacturer site and the third step corresponds to the metasurface manufacturer site.

Any of the location can be different from the other.

Such difference may correspond to very different cases. For instance, in one case, the second location and the third location may correspond to two apparatuses situated in the same building. According to another case, the second location and the third location correspond to different manufacturers working with the society in charge of determining the parameters of the optical system.

If the first location differs from the second location, the method further comprises a step of transmitting the parameters of the lens to a second location. Similarly, if the first location differs from the third location, the method further comprises a step of transmitting the parameters of the metasurface to a third location.

The transmission may be achieved by electronic communications, such as by internet connections, for example via one or more servers, e-mail communication, and the like.

In some embodiments, the method for manufacturing may also comprise a sequence of steps before the first and second steps of carrying out.

As a specific example, the method for manufacturing comprises a step of providing data relative to the eyes of the wearer at a fourth location, a step of transmitting data relative to the eyes of the wearer from the fourth location to the first location and a step of obtaining a transmission target function based on the data relative to the eyes of the wearer. The fourth location is often named a lens ordering site. The lens ordering site is typically at the premises of an eye care professional or optician where lenses are ordered for wearers.

For instance, the method comprises a step of transferring the lens and the metasurface to a fifth location, and a step of assembling the lens and the metasurface to obtain at least a part of the device.

In such case, the assembling is preferably achieved by gluing.

However, the metasurface can be formed directly on a surface of the lens by lithography techniques or self-assembly patterning or a combination of both techniques.

Such optical system may advantageously be used for several applications which are detailed below.

### FIRST APPLICATION : HEAD-MOUNTED DISPLAY DEVICES

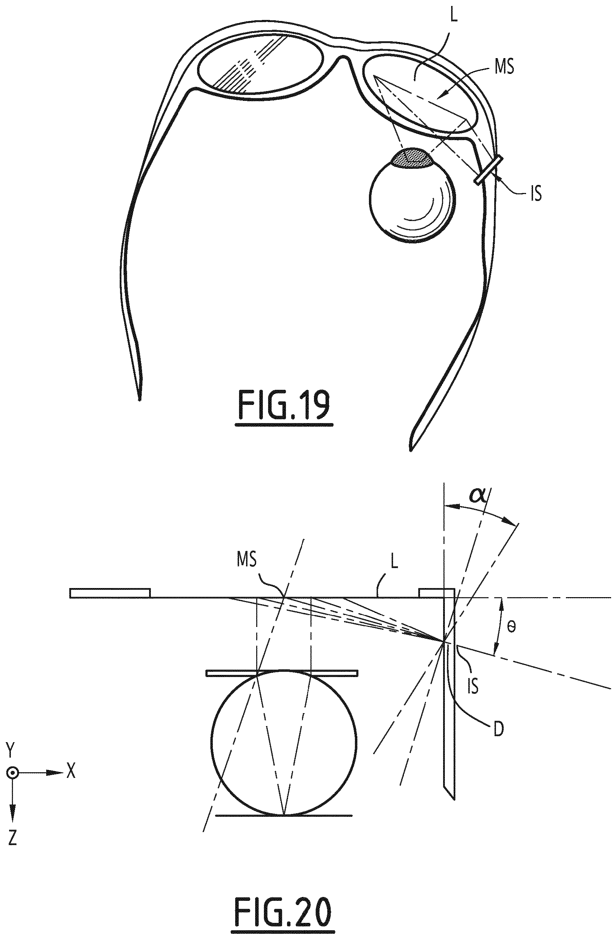

The optical system may be used in a head-mounted display device as illustrated in figure 19. Such devices are to be worn on or about the head of a wearer, including helmet-mounted displays, optical head-mounted displays, head-worn displays and the like.

The head-mounted display device enables to send an image for visualization by the wearer.

In such case, the range of wavelengths in reflection only covers the wavelengths corresponding to the visible band.

In specific examples, the intersection between the range of wavelengths in transmission and the range of wavelengths in reflection is three radiations. One radiation corresponds to a green color, one radiation corresponds to a blue color and one radiation corresponds to a red color. By radiation in this context, it is to be understood that the spectral bandwidth of the radiation is narrow enough so that it can be considered that a radiation is equivalent to a wavelength. When this is not the case, the wavelength of a radiation corresponds to the central wavelength of the spectral bandwidth.

Such number of radiations enables to form a coloured image in reflection while not disturbing the vision in transmission.

In other embodiment, the image is monochromatic.

According to the embodiment, the head-mounted display device may provide for the superimposed visualization of a computer-generated image and of a 'real-life' vision field. Computer-generated images comprise any computer-generated images, such as two-dimensional or three-dimensional diffraction images, two-dimensional or three-dimensional computer-generated holographic images or any amplitude images. Computer-generated images may be used as virtual images.

The head-mounted display device may be monocular (single eye) or binocular (both eyes). The head-mounted display device of this application can take various forms, including eyeglasses, masks such as skiing or diving masks or goggles provided the head-mounted display device comprises one lens.

Several embodiments can be considered for such head-mounted display device.

As visible on figure 19, the device is a head-mounted device comprising a frame and an optical system.

The device further comprises an image source IS.

The image source IS is any light source that can emit a light beam adapted to display the image for visualization by the wearer. Visualization occurs after the illumination beam stemming from the image source is reflected onto the metasurface MS. The light source IS may be a screen (for example OLED, LCD, LCOS, etc.), a phase and/or amplitude SLM (Spatial Light Modulator) taken in combination with its light source (for example laser, laser diode, etc.), a projector such as a picoprojector (MEMS or DLP, that may use LEDs, laser diodes, etc.), or any other source. The image source IS may also include any other image source (computer-generated image source), and/or control electronics and/or power supply.

For monochromatic use, it is preferred that the light beam emitted for image display comprises green light (wavelengths of about 500-560 nm). Green light is advantageous in that a lower energy is required since the human retina is more sensitive to wavelengths in this range. Examples of monochromatic light sources with emission at about 520-550 nm include green OLED displays, lasers at 532 nm, laser diodes at 520 nm or LED emitting at around 550 nm.

Other suitable monochromatic light sources include red: 615-645 nm; green: 520-550 nm; blue: 435-465 nm.

The image source IS is held by the frame, for example at the temple level, on an eyeglasses side stem.

This implies that the optical system parameters may include at least one image source data. This includes the location of the image source, the relative location (distance and/or spatial orientation) of an image source with reference to one or both lenses in the frame, the relative location (distance and or spatial orientation) of the image source with reference to the metasurface. The optical system parameters may also include data pertaining to the features of the image source itself, such as the wavelength/s of emission, the power or the aperture.

The image source IS is configured for illuminating said metasurface MS. The metasurface MS is also designed so as to cause, upon reflection onto the metasurface MS the visualization of a virtual image by the wearer.

In some specific embodiments, the image source IS is provided with a beam/image shaping optical component (prism, microprism, holographic component, grid, collimating and/or deflecting lens, projection lens, metasurfaces, combinations thereof, etc.) which allow to spatially configure (e.g. orient, compact, collimated, etc.) the beam from the image source.

It should be noted that, in these specific embodiments, the cited elements may also comprise metasurfaces that may operate in reflection or in transmission.

Preferably, the metasurface MS is notably further configured to correct the wearer's virtual vision.

According to another embodiment, the device further comprises a light guide for guiding the light.

The image source IS and the light guide are configured for illuminating. The metasurface MS is also designed so as to cause, upon reflection onto the metasurface the visualization of a virtual image by the wearer.

According to another embodiment, the device further comprises a filter. As a specific example, the filter is a red-green-blue filter used to create a color image.

In such first application, many optical functions are advantageous.

For instance, the reflective target function is suited for the visualization of a virtual image by the wearer when the metasurface is illuminated by a light beam,
According to another example, the optical system reflective target function is adapted for the wearer's virtual vision.

In variant, the second range of wavelengths is adapted to the emission spectrum of an external source.

### SECOND APPLICATION : EYE TRACKER

In a second application illustrated in figure 20 (the detector D being situated close to the image source IS), the head mounted device enables to image an eye of the wearer in an infrared band on a light detector so as to determine the orientation of the eye of the wearer.

The reflected image is therefore an infrared image.

In such case, the range of wavelengths in reflection only comprises the wavelengths in the infrared.

In specific examples, the range of wavelengths in transmission only comprises the wavelengths corresponding to the visible band.

Thus, in such case, the intersection between the range of wavelengths in transmission and the range of wavelengths in reflection is void. More generally, such property enables that the vision in transmission is not affected by the reflective properties of the metasurface.

The device further comprises a light source, a collector C and a light detector D.

In variant, the device comprises several light sources.

The light source is, for instance, held by the frame.

The light source is configured for illuminating said metasurface so as to cause, upon reflection onto the metasurface, the illumination of an eye of the wearer.

The collector C is a light collector, that is a collector configured to collect at least part of the light reflected by said eye.

As a specific example, the light collector C is a set of lenses.

The collector C, the metasurface MS and the detector D are arranged for forming an image of said eye of the wearer on the detector D.

According to another embodiment, the collector C further comprises another metasurface named second metasurface, the first metasurface being the metasurface MS that the lens comprises.

More specifically, at least one lens of the set of lenses forming the collector C comprises the second metasurface. The second metasurface is formed by at least one set of nanostructures.

In such case, the first metasurface, the collector C, the second metasurface and the detector D are arranged for forming an image of said eye of the wearer on the detector D.

In another example, the device further comprises a light guide.

In such case, the metasurface, the collector C, the light guide and the detector D are arranged for forming an image of said eye of the wearer on the detector.

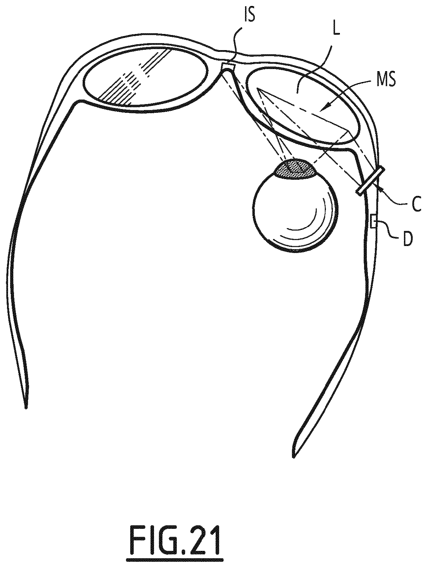

In another example illustrated by figure 21, the detector D is not situated close to the source IS.

In such example, the source IS directly sends infrared light to the eye which reflects this light towards the metasurface MS. The metasurface MS then reflects the received light towards the detector D located on the frame.

In another example not illustrated, the metasurface is used in diffuse reflection. This is indeed interesting in so far as the eye tracker is adapted to carry out both the sending and the reception of the light. In other words, the metasurface both enables to send a light signal to the eye and to collect the light reflected by the eye. Both roles (sending and collecting) can be achieved by different parts of the metasurface. This collected signal can be sent to a detector adapted to determine the orientation or position of the eye. A four-quadrant detector is an example adapted to determine the orientation or position of the eye.

In variant or in addition, the metasurface is also used in diffuse transmission for the collector.In another example not illustrated, the metasurface is used in a combination of both specular and diffuse reflection : it is advantageous that the metasurface diffuses the incident light in order to illuminate the eye and keeps a specular reflection in order to reflect the eye image towards a camera.

### THIRD APPLICATION : SOLAR LENS

When the lens is a solar lens, the metasurface that is placed on the rear face of the lens is less visible from the exterior than for a white lens.

In such case, the metasurface can be used to increase the reflection of wavelengths between 465 nm and 495 nm. This is interesting so as to improve the functionality of the solar lens.

It is also to be noted that the metasurface increasing the reflection of wavelengths between 465 nm and 495 nm can also be used to obtain optical system which respects more the constraints of chronobiology of a subject.

Alternatively, the metasurface may be used for absorb the precited wavelengths.

Other applications not further detailed may be cited;
For instance, it can be considered an embodiment wherein a transmission target function in the front face of a lens adapted to reflect blue wavelengths which are not recommended for the eye of the wearer.

As another example, the optical system may be adapted to watch a screen. In such application, the intersection between the first range and the second range of wavelengths is void.

According to another example, the optical system may comprise an additional patch. In such case, the metasurface is adapted to operate on the full visible spectrum. In a specific embodiment, the additional patch may also comprise metasurface adapted to operate in transmission.

Other applications or specific embodiments of the previous applications may be deduced by transposing the optical system described in the following articles:
- a proceedings of SPIE by Ori Avayu, Ran Ditcovski and Tal ellenbogen whose title is "Ultrathin full color visor with large field of view based on multilayered metasurface design" which was published in 2018 in volume 10676 from page 1037612-1 to page 1037612-6 ;
- a proceedings of SPIE by Zhujun Shi, Wei Ting Chen and Federico Capasso whose title is "Wide field-of-view waveguide displays enabled by polarization dependent metagratings" which was published in 2018 in volume 10676 from page 1037615-1 to page 1037615-6 ;
- a proceedings of SPIE by Zhujun Shi and Federico Capasso whose title is "Polarization-dependent metasurfaces for 2D/3D switchable displays" which was published in 2018 in volume 10676 from page 1037618-1 to page 1037618-8 ;
- a proceedings of SPIE by Guillaume Basset whose title is "Meta-resonant waveguide gratings for augmented and mixed reality" which was published in 2018 in volume 10676 from page 1037617-1 to page 1037617-7 , and
- an article by Chuchuan Hong, Shane Colburn, and Arka Majumdar from Applied Optics, volume 56, pages 8822 to 8827 in 2017, the title being "Flat metaform near-eye visor".

As apparent, the optical system can be used for a variety of applications.

As a summary, examples of interesting optical functions are recalled here, in form or a non limitative list :
- the optical system transmission target function is suited for the wearer, the transmission target function defining for each gaze direction of the wearer when the optical system is worn a refractive power, a module of astigmatism and an axis of astigmatism, said refractive power, module of astigmatism and axis of astigmatism being determined based on prescribed astigmatism and prescribed refractive power,
- the optical system reflective target function is suited for the visualization of a virtual image by the wearer when the metasurface is illuminated by a light beam,
- the optical system reflective target function is adapted for the wearer's virtual vision,
- the optical system reflective target function is suited to form an image of an eye of the wearer at a predetermined location,
- the optical system reflective target function is suited to form a virtual image,
- the intersection between the first range and the second range of wavelengths is void,
- the first range of wavelengths covers the wavelengths corresponding to the visible band,
- the first range of wavelengths only comprises the wavelengths corresponding to the visible band,
- the second range of wavelengths is adapted to the emission spectrum of an external source,
- the second range of wavelengths only comprises the wavelengths in the infrared,
- the intersection between the first range and the second range is inferior to five radiations,
- the intersection between the first range of wavelengths and the second range of wavelengths is three radiations, one radiation corresponding to a green color, one radiation corresponding to a blue color and one radiation corresponding to a red color,
- the intersection between the first range of wavelengths and the second range of wavelengths comprises an ultraviolet radiation,
- the intersection between the first range of wavelengths and the second range of wavelengths comprises one radiation corresponding to a blue color, and
- the intersection between the first range of wavelengths and the second range of wavelengths comprises at least one radiation chosen among an ultraviolet radiation, a visible radiation and an infrared radiation.

## Claims

1. A computer-implemented method for determining parameters of an optical system intended to be held by a frame and worn by a wearer, the optical system comprising a lens (L), the lens further comprising a metasurface (M, MS), the metasurface being formed by at least a set of nanostructures (NS), parameters being defined for the lens and the metasurface, the method comprising the steps of:
- providing an optical system transmission target optical function and an optical system reflective target optical function,
- providing an optical transmission cost function, the optical transmission cost function being related to an optical function of the system in transmission when the system is worn by the wearer,
- providing an optical reflective cost function, the optical reflective cost function being related to an optical function of the system in reflection when the system is worn by the wearer, and
- determining the optical system that minimizes the difference between a global cost function and a target value of the global cost function by modifying at least one parameter of the system, among which one of the metasurface, the global cost function being a function of the optical transmission cost function and of the optical reflective cost function and the target value being a function of the optical system transmission target optical function and of the optical system reflective target optical function.

2. The method according to claim 1, wherein the parameters of the lens are chosen in the group consisting of:
- the diameter of the lens,
- the thickness of the lens,
- the material of the lens,
- for at least one surface of the lens having in each point a mean sphere value and a cylinder value, the value of the mean sphere value and of the cylinder in each point, and
- the fitting parameters of the lens onto the frame,
the parameters of the metasurface being, for instance, chosen in the group consisting of:
- the number of set of nanostructures,
- the spatial extension of each set of nanostructures,
- the location of each set of nanostructures,
- the material of the nanostructures,
- the shape of the nanostructures,
- the number of nanostructures within the set of nanostructures to which the nanostructures belong,
- the orientation of the nanostructures,
- the aspect ratio of the nanostructures,
- the distance between nanostructures,
- the properties of the lattice, when the nanostructures are arranged in lattice, notably the nature of the lattice or the number of nanostructures in the lattice,
- the location of the metasurface with relation to a front surface and a rear surface of the lens, the metasurface being located on the rear surface of the lens, on the front surface of the lens or between the rear surface and the front surface, and
- the methods of activation of a set of nanostructures if the nanostructures of the set of nanostructures are activable by several methods of activation.

3. The method according to claim 1 or 2, wherein at least one of the following properties is fulfilled:
- the optical system transmission target function is suited for the wearer, the transmission target function defining for each gaze direction of the wearer when the optical system is worn a refractive power, a module of astigmatism and an axis of astigmatism, said refractive power, module of astigmatism and axis of astigmatism being determined based on prescribed astigmatism and prescribed refractive power,
- the optical system reflective target function is suited for the visualization of a virtual image by the wearer when the metasurface is illuminated by a light beam,
- the optical system reflective target function is adapted for the wearer's virtual vision,
- the optical system reflective target function is suited to form an image of an eye of the wearer at a predetermined location, and
- the optical system reflective target function is suited to form a virtual image.

4. The method according to any one of claims 1 to 3, wherein the optical system further comprises at least one of the following elements notably intended to be held by the frame:
- a light source,
- an image source,
- a light collector, the light collector being a set of lenses, notably a set of lenses among which at least one comprises a metasurface formed by at least one set of nanostructures,
- a light detector,
- a light guide, notably a light guide comprising a metasurface formed by at least a set of nanostructures,
- a filter, and
- an imaging detector.

5. The method according to any one of the previous 1 to 4, wherein the optical system transmission target optical function is defined for a first range of wavelengths and the optical system reflective target optical function is defined for a second range of wavelengths, at least one of the following properties being fulfilled:
- the intersection between the first range and the second range is void,
- the first range of wavelengths covers the wavelengths corresponding to the visible band,
- the first range of wavelengths only comprises the wavelengths corresponding to the visible band,
- the second range of wavelengths is adapted to the emission spectrum of an external source,
- the second range of wavelengths only comprises the wavelengths in the infrared,
- the intersection between the first range and the second range is inferior to five radiations,
- the intersection between the first range of wavelengths and the second range of wavelengths is three radiations, one radiation corresponding to a green color, one radiation corresponding to a blue color and one radiation corresponding to a red color,
- the intersection between the first range of wavelengths and the second range of wavelengths comprises an ultraviolet radiation,
- the intersection between the first range of wavelengths and the second range of wavelengths comprises one radiation corresponding to a blue color, and
- the intersection between the first range of wavelengths and the second range of wavelengths comprises at least one radiation chosen among an ultraviolet radiation, a visible radiation and an infrared radiation.

6. A head mounted device, intended to be worn by a wearer, the head mounted device comprising a frame and an optical system, the head mounted device also comprising an image source (IS) held by the frame, the optical system comprising a lens (L), the lens further comprising a metasurface (M, MS) formed by at least a set of nanostructures (NS), at least the lens and the metasurface being configured to achieve an optical system transmission target optical function and an optical system reflective target optical function,
wherein the optical system transmission target optical function is configured for a first range of wavelengths and the optical system reflective target optical function is configured for a second range of wavelengths,
, the second range of wavelengths is adapted to the emission spectrum of the image source,
the image source being further configured for illuminating said metasurface so as to cause, upon reflection onto the metasurface and optionally guiding by a light guide, the visualization of a virtual image by the wearer, the metasurface being further configured to correct the wearer's virtual vision.

7. The head mounted device according to claim 6, wherein the lens is an ophthalmic lens adapted to correct the ametropia of the wearer, the lens being adapted to be fitted onto the frame.

8. The head mounted device according to claim 6 or 7, the device further comprising a collector configured to collect at least part of the light reflected by said eye and a light detector and optionally a light guide, the collector, the metasurface, the detector and optionally the light guide being arranged for forming an image of said eye of the wearer on the detector, the collector comprising another metasurface, provided on a frame that is part of the device.

9. A computer program product comprising one or more stored sequence of instructions that is accessible to a processor and which, when executed by the processor, causes the processor to carry out the steps of the method according to any one of claims 1 to 4.

10. A computer readable-medium carrying out one or more sequences of instructions of the computer program of the claim 9.

11. A method for manufacturing an optical system intended to be held by a frame and worn by a wearer, the optical system comprising a lens, the lens further comprising a metasurface formed by at least a set of nanostructures, the method comprising the steps of:
- carrying out at a first location the method according to any one of the claims 1 to 4, to determine the parameters of the optical system, the determined parameters of the optical system comprising parameters of the lens and parameters of the metasurface,
- manufacturing the lens according to the parameters of the lens at a second location,
- manufacturing the metasurface according to the parameters of the metasurface at a third location,
the method further optionally comprising at least one of the following sequences of steps:
- a first sequence of steps comprising the steps of:
- providing data relative to the eyes of the wearer at a fourth location,
- transmitting data relative to the eyes of the wearer from the fourth location to the first location,
- obtaining a transmission target function based on the data relative to the eyes of the wearer,
- a second sequence of steps comprising the steps of:
- transferring the lens and the metasurface to a fifth location, and
- assembling the lens and the metasurface to obtain at least a part of the device, the assembling being preferably achieved by gluing, and
- a third sequence of steps comprising the steps of :
- transmitting the parameters of the lens to a second location, and
- transmitting the parameters of the metasurface to a third location.

12. A set of apparatuses for manufacturing a device, wherein the apparatuses are adapted to carry out steps of the method according to claim 11.

## Patentansprüche

1. Computerimplementiertes Verfahren zum Bestimmen von Parametern eines optischen Systems, das dafür bestimmt ist, durch eine Fassung gehalten und durch einen Träger getragen zu werden, wobei das optische System eine Linse (L) umfasst, wobei die Linse ferner eine Metaoberfläche (M, MS) umfasst, wobei die Metaoberfläche durch wenigstens einen Satz von Nanostrukturen (NS) gebildet ist, wobei Parameter für die Linse und die Metaoberfläche definiert sind, wobei das Verfahren die folgenden Schritte umfasst:
- Bereitstellen einer optischen Transmissionszielfunktion des optischen Systems und einer optischen Reflexionszielfunktion des optischen Systems,
- Bereitstellen einer optischen Transmissionskostenfunktion, wobei die optische Transmissionskostenfunktion mit einer optischen Funktion des Systems in Transmission in Zusammenhang steht, wenn das System durch den Träger getragen wird;
- Bereitstellen einer optischen Reflexionskostenfunktion, wobei die optische Reflexionskostenfunktion mit einer optischen Funktion des Systems in Reflexion in Zusammenhang steht, wenn das System durch den Träger getragen wird;
- Bestimmen des optischen Systems, das die Differenz zwischen einer globalen Kostenfunktion und einem Zielwert der globalen Kostenfunktion minimiert, durch Modifizieren wenigstens eines Parameters des Systems, darunter einer der Metaoberfläche, wobei die globale Kostenfunktion eine Funktion der optischen Transmissionskostenfunktion und der optischen Reflexionskostenfunktion ist und der Zielwert eine Funktion der optischen Transmissionszielfunktion des optischen Systems und der optischen Reflexionszielfunktion des optischen Systems ist.

2. Verfahren nach Anspruch 1, wobei die Parameter der Linse aus der Gruppe ausgewählt werden, die aus Folgendem besteht:
- dem Durchmesser der Linse,
- der Dicke der Linse,
- dem Material der Linse,
- für wenigstens eine Oberfläche der Linse, die an jedem Punkt einen mittleren Sphärenwert und einen Zylinderwert aufweist, dem Wert des mittleren Sphärenwertes und des Zylinders an jedem Punkt, und
- den Einpassungsparametern der Linse an die Fassung,
wobei die Parameter der Metaoberfläche beispielsweise aus der Gruppe ausgewählt werden, die aus Folgendem besteht:
- der Anzahl der Sätze von Nanostrukturen,
- der räumlichen Ausdehnung jedes Satzes von Nanostrukturen,
- dem Ort jedes Satzes von Nanostrukturen,
- dem Material der Nanostrukturen,
- der Form der Nanostrukturen,
- der Anzahl von Nanostrukturen innerhalb des Satzes von Nanostrukturen, zu dem die Nanostrukturen gehören;
- der Ausrichtung der Nanostrukturen,
- dem Aspektverhältnis der Nanostrukturen,
- der Entfernung zwischen Nanostrukturen,
- den Eigenschaften des Gitters, wenn die Nanostrukturen im Gitter angeordnet sind, insbesondere der Art des Gitters oder der Anzahl der Nanostrukturen in dem Gitter;
- dem Ort der Metaoberfläche in Bezug auf eine vordere Oberfläche und eine hintere Oberfläche der Linse, wobei sich die Metaoberfläche auf der hinteren Oberfläche der Linse, auf der vorderen Oberfläche der Linse oder zwischen der hinteren Oberfläche und der vorderen Oberfläche befindet, und
- den Verfahren zur Aktivierung eines Satzes von Nanostrukturen, falls die Nanostrukturen des Satzes von Nanostrukturen durch einige Aktivierungsverfahren aktivierbar sind.

3. Verfahren nach Anspruch 1 oder 2, wobei wenigstens eine der folgenden Eigenschaften erfüllt wird:
- die Transmissionszielfunktion des optischen Systems ist für den Träger geeignet, wobei die Transmissionszielfunktion für jede Blickrichtung des Trägers, wenn das optische System getragen wird, eine Brechkraft, ein Astigmatismusmodul und eine Astigmatismusachse definiert, wobei die Brechkraft, das Astigmatismusmodul und die Astigmatismusachse basierend auf einem verschriebenen Astigmatismus und einer verschriebenen Brechkraft bestimmt werden;
- die Reflexionszielfunktion des optischen Systems ist für die Visualisierung eines virtuellen Bildes durch den Träger geeignet, wenn die Metaoberfläche durch einen Lichtstrahl beleuchtet wird;
- die Reflexionszielfunktion des optischen Systems ist an die virtuelle Sicht des Trägers angepasst;
- die Reflexionszielfunktion des optischen Systems ist dafür geeignet, ein Bild eines Auges des Trägers an einem vorbestimmten Ort zu bilden, und
- die Reflexionszielfunktion des optischen Systems ist dafür geeignet, ein virtuelles Bild zu bilden.

4. Verfahren nach einem der Ansprüche 1 bis 3, wobei das optische System ferner wenigstens eines der folgenden Elemente umfasst, die insbesondere dazu bestimmt sind, durch die Fassung gehalten zu werden:
- eine Lichtquelle,
- eine Bildquelle,
- einen Lichtkollektor, wobei der Lichtkollektor ein Satz von Linsen ist, insbesondere ein Satz von Linsen, von denen wenigstens eine eine Metaoberfläche umfasst, die durch wenigstens einen Satz von Nanostrukturen gebildet ist,
- einen Lichtdetektor,
- einen Lichtleiter, insbesondere einen Lichtleiter, der eine Metaoberfläche umfasst, die durch wenigstens einen Satz von Nanostrukturen gebildet ist,
- ein Filter, und
- einen Bildgebungsdetektor.

5. Verfahren nach einem der vorhergehenden Ansprüche 1 bis 4, wobei die optische Transmissionszielfunktion des optischen Systems für einen ersten Wellenlängenbereich definiert ist und die optische Reflexionszielfunktion des optischen Systems für einen zweiten Wellenlängenbereich definiert ist, wobei wenigstens eine der folgenden Eigenschaften erfüllt ist:
- die Schnittmenge zwischen dem ersten Bereich und dem zweiten Bereich ist leer,
- der erste Wellenlängenbereich deckt die Wellenlängen ab, die dem sichtbaren Band entsprechen,
- der erste Wellenlängenbereich umfasst nur die Wellenlängen, die dem sichtbaren Band entsprechen,
- der zweite Wellenlängenbereich ist an das Emissionsspektrum einer externen Quelle angepasst,
- der zweite Wellenlängenbereich umfasst nur die Wellenlängen im Infrarotbereich,
- die Schnittmenge zwischen dem ersten Bereich und dem zweiten Bereich umfasst weniger als fünf Strahlungen,
- die Schnittmenge zwischen dem ersten Wellenlängenbereich und dem zweiten Wellenlängenbereich umfasst drei Strahlungen, wobei eine Strahlung einer grünen Farbe entspricht, eine Strahlung einer blauen Farbe entspricht und eine Strahlung einer roten Farbe entspricht;
- die Schnittmenge zwischen dem ersten Wellenlängenbereich und dem zweiten Wellenlängenbereich umfasst eine Ultraviolettstrahlung,
- die Schnittmenge zwischen dem ersten Wellenlängenbereich und dem zweiten Wellenlängenbereich umfasst eine Strahlung, die einer blauen Farbe entspricht, und
- die Schnittmenge zwischen dem ersten Wellenlängenbereich und dem zweiten Wellenlängenbereich umfasst wenigstens eine Strahlung, die aus einer Ultraviolettstrahlung, einer sichtbaren Strahlung und einer Infrarotstrahlung ausgewählt ist.

6. Kopfmontierte Vorrichtung, die dazu bestimmt ist, durch einen Träger getragen zu werden, wobei die kopfmontierte Vorrichtung eine Fassung und ein optisches System umfasst, wobei die kopfmontierte Vorrichtung auch eine Bildquelle (IS) umfasst, die durch die Fassung gehalten wird, wobei das optische System eine Linse (L) umfasst, wobei die Linse ferner eine Metaoberfläche (M, MS) umfasst, die durch wenigstens einen Satz von Nanostrukturen (NS) gebildet wird, wobei wenigstens die Linse und die Metaoberfläche dazu konfiguriert sind, eine optische Transmissionszielfunktion des optischen Systems und eine optische Reflexionszielfunktion des optischen System zu erzielen,
wobei die optische Transmissionszielfunktion des optischen Systems für einen ersten Wellenlängenbereich konfiguriert ist und die optische Reflexionszielfunktion des optischen Systems für einen zweiten Wellenlängenbereich konfiguriert ist,
der zweite Wellenlängenbereich an das Emissionsspektrum der Bildquelle angepasst ist,
wobei die Bildquelle ferner dazu konfiguriert ist, die Metaoberfläche zu beleuchten, so dass bei Reflexion an der Metaoberfläche und optional Führung durch einen Lichtleiter die Visualisierung eines virtuellen Bildes durch den Träger bewirkt wird, wobei die Metaoberfläche ferner dazu konfiguriert ist, die virtuelle Sicht des Trägers zu korrigieren.

7. Kopfmontierte Vorrichtung nach Anspruch 6, wobei die Linse eine ophthalmische Linse ist, die dazu konfiguriert ist, die Ametropie des Trägers zu korrigieren, wobei die Linse dazu eingerichtet ist, in die Fassung eingepasst zu werden.

8. Kopfmontierte Vorrichtung nach Anspruch 6 oder 7, wobei die Vorrichtung ferner einen Kollektor, der dazu konfiguriert ist, wenigstens einen Teil des durch das Auge reflektierten Lichts zu sammeln, und einen Lichtdetektor und optional einen Lichtleiter umfasst, wobei der Kollektor, die Metaoberfläche, der Detektor und optional der Lichtleiter dazu eingerichtet sind, ein Bild des Auges des Trägers auf dem Detektor zu bilden, wobei der Kollektor eine andere Metaoberfläche umfasst, die auf einer Fassung bereitgestellt ist, die Teil der Vorrichtung ist.

9. Computerprogrammprodukt, das eine oder mehrere gespeicherte Sequenzen von Anweisungen umfasst, auf die ein Prozessor zugreifen kann und die, wenn sie durch den Prozessor ausgeführt werden, den Prozessor zum Ausführen der Schritte des Verfahrens nach einem der Ansprüche 1 bis 4 veranlassen.

10. Computerlesbares Medium, das eine oder mehrere Sequenzen von Anweisungen des Computerprogramms nach Anspruch 9 trägt.

11. Verfahren zum Herstellen eines optischen Systems, das dafür bestimmt ist, durch eine Fassung gehalten und durch einen Träger getragen zu werden, wobei das optische System eine Linse umfasst, wobei die Linse ferner eine Metaoberfläche umfasst, die durch wenigstens einen Satz von Nanostrukturen gebildet ist, wobei das Verfahren die folgenden Schritte umfasst:
- Ausführen, an einem ersten Ort, des Verfahrens nach einem der Ansprüche 1 bis 4, um die Parameter des optischen Systems zu bestimmen, wobei die bestimmten Parameter des optischen Systems Parameter der Linse und Parameter der Metaoberfläche umfassen,
- Herstellen der Linse gemäß den Parametern der Linse an einem zweiten Ort,
- Herstellen der Metaoberfläche gemäß den Parametern der Metaoberfläche an einem dritten Ort,
wobei das Verfahren ferner optional wenigstens eine der folgenden Sequenzen von Schritten umfasst:
- eine erste Sequenz von Schritten, die die folgenden Schritte umfasst:
- Bereitstellung von Daten in Bezug auf die Augen des Trägers an einem vierten Ort,
- Übertragen von Daten in Bezug auf die Augen des Trägers von dem vierten Ort zu dem ersten Ort;
- Erhalten einer Transmissionszielfunktion basierend auf den Daten in Bezug auf die Augen des Trägers,
- eine zweite Sequenz von Schritten, die die folgenden Schritte umfasst:
- Transferieren der Linse und der Metaoberfläche zu einem fünften Ort, und
- Zusammenfügen der Linse und der Metaoberfläche, um wenigstens einen Teil der Vorrichtung zu erhalten, wobei das Zusammenfügen vorzugsweise durch Kleben erreicht wird, und
- eine dritte Sequenz von Schritten, die die folgenden Schritte umfasst:
- Übertragen der Parameter der Linse zu einem zweiten Ort, und
- Übertragen der Parameter der Metaoberfläche zu einem dritten Ort.

12. Satz von Einrichtungen zum Herstellen einer Vorrichtung, wobei die Einrichtungen dazu eingerichtet sind, Schritte des Verfahrens nach Anspruch 11 auszuführen.

## Revendications

1. Procédé mis en œuvre par ordinateur pour déterminer des paramètres d'un système optique destiné à être tenu par une monture et porté par un porteur, le système optique comprenant une lentille (L), la lentille comprenant en outre une métasurface (M, MS), la métasurface étant formée par au moins un ensemble de nanostructures (NS), des paramètres étant définis pour la lentille et la métasurface, le procédé comprenant les étapes suivantes :
- fourniture d'une fonction optique cible de transmission de système optique et d'une fonction optique cible de réflexion de système optique,
- fourniture d'une fonction de coût de transmission optique, la fonction de coût de transmission optique étant associée à une fonction optique du système en transmission lorsque le système est porté par le porteur,
- fourniture d'une fonction de coût de réflexion optique, la fonction de coût de réflexion optique étant associée à une fonction optique du système en réflexion lorsque le système est porté par le porteur, et
- détermination du système optique qui minimise la différence entre une fonction de coût global et une valeur cible de la fonction de coût global par modification d'au moins un paramètre du système, dont un de la métasurface, la fonction de coût global étant une fonction de la fonction de coût de transmission optique et de la fonction de coût de réflexion optique et la valeur cible étant une fonction de la fonction optique cible de transmission de système optique et de la fonction optique cible de réflexion de système optique.

2. Procédé selon la revendication 1, dans lequel les paramètres de la lentille sont choisis dans le groupe constitué par :
- le diamètre de la lentille,
- l'épaisseur de la lentille,
- le matériau de la lentille,
- pour au moins une surface de la lentille ayant en chaque point une valeur sphérique moyenne et une valeur cylindrique, la valeur sphérique moyenne et la valeur cylindrique en chaque point, et
- les paramètres d'ajustement de la lentille sur la monture,
les paramètres de la métasurface étant par exemple choisis dans le groupe constitué par :
- le nombre d'ensembles de nanostructures,
- l'étendue spatiale de chaque ensemble de nanostructures,
- l'emplacement de chaque ensemble de nanostructures,
- le matériau des nanostructures,
- la forme des nanostructures,
- le nombre de nanostructures à l'intérieur de l'ensemble de nanostructures auquel appartiennent les nanostructures,
- l'orientation des nanostructures,
- le rapport de forme des nanostructures,
- la distance entre nanostructures,
- les propriétés du réseau, lorsque les nanostructures sont disposées en réseau, notamment la nature du réseau ou le nombre de nanostructures dans le réseau,
- l'emplacement de la métasurface par rapport à une surface avant et une surface arrière de la lentille, la métasurface étant située sur la surface arrière de la lentille, sur la surface avant de la lentille ou entre la surface arrière et la surface avant, et
- les procédés d'activation d'un ensemble de nanostructures si les nanostructures de l'ensemble de nanostructures sont activables par plusieurs procédés d'activation.

3. Procédé selon la revendication 1 ou 2, dans lequel au moins une des propriétés suivantes est respectée :
- la fonction cible de transmission de système optique est adaptée au porteur, la fonction cible de transmission définissant, pour chaque direction du regard du porteur lorsque le système optique est porté, une puissance réfractive, un module d'astigmatisme et un axe d'astigmatisme, ladite puissance réfractive, ledit module d'astigmatisme et ledit axe d'astigmatisme étant déterminés sur la base d'un astigmatisme prescrit et d'une puissance réfractive prescrite,
- la fonction cible de réflexion de système optique est adaptée à la visualisation d'une image virtuelle par le porteur lorsque la métasurface est éclairée par un faisceau lumineux,
- la fonction cible de réflexion de système optique est adaptée à une vision virtuelle du porteur,
- la fonction cible de réflexion de système optique est adaptée à la formation d'une image d'un œil du porteur à un emplacement prédéterminé, et
- la fonction cible de réflexion de système optique est adaptée à la formation d'une image virtuelle.

4. Procédé selon l'une quelconque des revendications 1 à 3, dans lequel le système optique comprend en outre au moins un des éléments suivants, notamment destinés à être tenus par la monture :
- une source de lumière,
- une source d'images,
- un collecteur de lumière, le collecteur de lumière étant un ensemble de lentilles, notamment un ensemble de lentilles dont au moins une comprend une métasurface formée par au moins un ensemble de nanostructures,
- un détecteur de lumière,
- un conduit de lumière, notamment un conduit de lumière comprenant une métasurface formée par au moins un ensemble de nanostructures,
- un filtre, et
- un détecteur d'imagerie.

5. Procédé selon l'une quelconque des revendications 1 à 4 précédentes, dans lequel la fonction optique cible de transmission de système optique est définie pour une première plage de longueurs d'onde et la fonction optique cible de réflexion de système optique est définie pour une deuxième plage de longueurs d'onde, au moins une des propriétés suivantes étant respectée :
- l'intersection de la première plage et de la deuxième plage est vide,
- la première plage de longueurs d'onde couvre les longueurs d'onde correspondant à la bande visible,
- la première plage de longueurs d'onde comprend uniquement les longueurs d'onde correspondant à la bande visible,
- la deuxième plage de longueurs d'onde est adaptée au spectre d'émission d'une source externe,
- la deuxième plage de longueurs d'onde comprend uniquement les longueurs d'onde dans l'infrarouge,
- l'intersection de la première plage et de la deuxième plage est inférieure à cinq rayonnements,
- l'intersection de la première plage de longueurs d'onde et de la deuxième plage de longueurs d'onde se compose de trois rayonnements, un rayonnement correspondant à une couleur verte, un rayonnement correspondant à une couleur bleue et un rayonnement correspondant à une couleur rouge,
- l'intersection de la première plage de longueurs d'onde et de la deuxième plage de longueurs d'onde comprend un rayonnement ultraviolet,
- l'intersection de la première plage de longueurs d'onde et de la deuxième plage de longueurs d'onde comprend un rayonnement correspondant à une couleur bleue, et
- l'intersection de la première plage de longueurs d'onde et de la deuxième plage de longueurs d'onde comprend au moins un rayonnement choisi parmi un rayonnement ultraviolet, un rayonnement visible et un rayonnement infrarouge.

6. Dispositif monté sur la tête, destiné à être porté par un porteur, le dispositif monté sur la tête comprenant une monture et un système optique, le dispositif monté sur la tête comprenant également une source d'images (IS) tenue par la monture, le système optique comprenant une lentille (L), la lentille comprenant en outre une métasurface (M, MS) formée par au moins un ensemble de nanostructures (NS), au moins la lentille et la métasurface étant conçues pour assurer une fonction optique cible de transmission de système optique et une fonction optique cible de réflexion de système optique,
la fonction optique cible de transmission de système optique étant conçue pour une première plage de longueurs d'onde et la fonction optique cible de réflexion de système optique étant conçue pour une deuxième plage de longueurs d'onde,
la deuxième plage de longueurs d'onde étant adaptée au spectre d'émission de la source d'images,
la source d'images étant en outre conçue pour éclairer ladite métasurface de manière à induire, lors de la réflexion sur la métasurface et éventuellement du guidage par un conduit de lumière, la visualisation d'une image virtuelle par le porteur, la métasurface étant en outre conçue pour corriger la vision virtuelle du porteur.

7. Dispositif monté sur la tête selon la revendication 6, dans lequel la lentille est une lentille ophtalmique adaptée à la correction de l'amétropie du porteur, la lentille étant adaptée pour être ajustée sur la monture.

8. Dispositif monté sur la tête selon la revendication 6 ou 7, le dispositif comprenant en outre un collecteur conçu pour collecter au moins une partie de la lumière réfléchie par ledit œil et un détecteur de lumière et éventuellement un conduit de lumière, le collecteur, la métasurface, le détecteur et éventuellement le conduit de lumière étant agencés pour former une image dudit œil du porteur sur le détecteur, le collecteur comprenant une autre métasurface, disposée sur une monture qui fait partie du dispositif.

9. Produit-programme informatique comprenant une ou plusieurs séquences d'instructions stockées qui sont accessibles à un processeur et qui, lorsqu'elles sont exécutées par le processeur, amènent le processeur à réaliser les étapes du procédé selon l'une quelconque des revendications 1 à 4.

10. Support lisible par ordinateur portant une ou plusieurs séquences d'instructions du programme informatique de la revendication 9.

11. Procédé de fabrication d'un système optique destiné à être tenu par une monture et porté par un porteur, le système optique comprenant une lentille, la lentille comprenant en outre une métasurface formée par au moins un ensemble de nanostructures, le procédé comprenant les étapes suivantes :
- réalisation à un premier emplacement du procédé selon l'une quelconque des revendications 1 à 4, afin de déterminer les paramètres du système optique, les paramètres déterminés du système optique comprenant des paramètres de la lentille et des paramètres de la métasurface,
- fabrication de la lentille en fonction des paramètres de la lentille à un deuxième emplacement,
- fabrication de la métasurface en fonction des paramètres de la métasurface à un troisième emplacement,
le procédé comprenant en outre éventuellement au moins une des séquences d'étapes suivantes :
- une première séquence d'étapes comprenant les étapes suivantes :
- fourniture de données relatives aux yeux du porteur à un quatrième emplacement,
- transmission de données relatives aux yeux du porteur depuis le quatrième emplacement au premier emplacement,
- obtention d'une fonction cible de transmission sur la base des données relatives aux yeux du porteur,
- une deuxième séquence d'étapes comprenant les étapes suivantes :
- transfert de la lentille et de la métasurface à un cinquième emplacement, et
- assemblage de la lentille et de la métasurface pour obtenir au moins une partie du dispositif, l'assemblage étant de préférence réalisé par collage, et
- une troisième séquence d'étapes comprenant les étapes suivantes :
- transmission des paramètres de la lentille à un deuxième emplacement, et
- transmission des paramètres de la métasurface à un troisième emplacement.

12. Ensemble d'appareils destinés à fabriquer un dispositif, les appareils étant adaptés pour réaliser des étapes du procédé selon la revendication 11.
